# EUROPEAN PATENT SPECIFICATION

(11) **EP 3 402 261 B1**
(45) Date of publication and mention of the grant of the patent: **17.06.2020**
(21) Application number: 17170452.1
(22) Date of filing: 10.05.2017
(51) Int. Cl.: H04W 56/00, H04W 52/02

(54) **METHODS AND DEVICES INDICATING AT LEAST ONE OF A TEMPERATURE AND FREQUENCY DEVIATION**
VERFAHREN UND VORRICHTUNGEN, DIE MINDESTENS EINE VON EINER TEMPERATUR- UND FREQUENZABWEICHUNG ANGEBEN
PROCÉDÉS ET DISPOSITIFS INDIQUANT AU MOINS UN ÉCART DE TEMPÉRATURE ET DE FRÉQUENCE

(43) Date of publication of application: 14.11.2018
(73) Proprietor: Intel IP Corporation, Santa Clara, CA 95054 (US)
(72) Inventor: HAMMES, Markus, 46539 Dinslaken (DE); KRANZ, Christian, 40885 Ratingen (DE); SCHMANDT, Bernd, 42349 Wuppertal (DE)
(74) Representative: Lang, Johannes

(56) References cited:
- US-A1- 2008 222 440
- US-A1- 2016 322 978

## Description

### FIELD

The disclosure relates to radio devices indicating at least one of a temperature and frequency deviation of its clock, in particular of its low power clock. In addition, the disclosure relates to methods for indicating such deviations. The disclosure particularly relates to techniques for power saving by low power clock drift indication.

### BACKGROUND

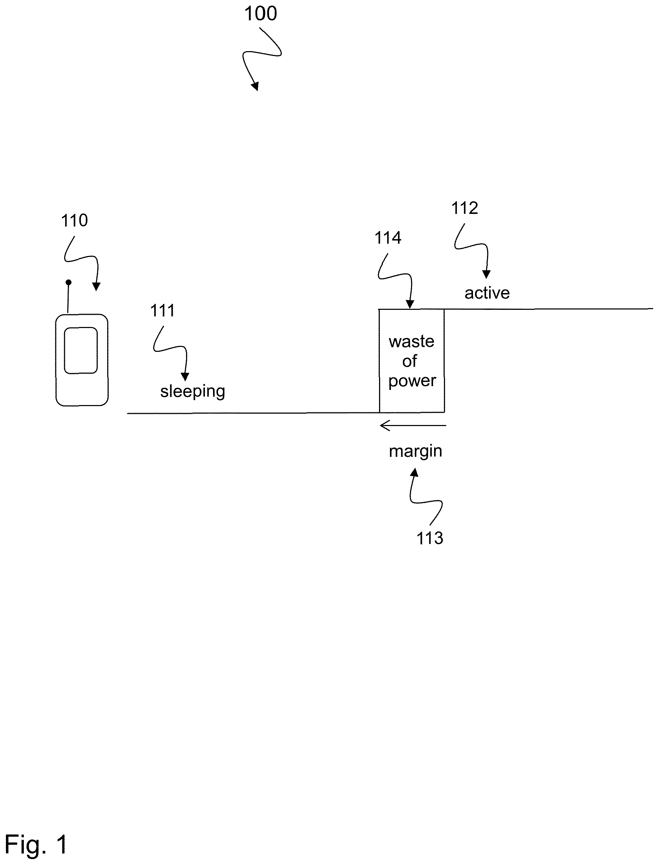

Many wireless communications systems 100 as e.g. shown in Fig. 1 have different states. In one state the modem and the radio frequency (RF) part is active 112, and in the other phases, also called sleeping phase 111, only a clock keeping unit keeps the timing. This accounts for the requirements of a mobile device 110 to lower the current consumption by means of only waking up when the modem and RF activity is expected. Due to temperature variation, frequency versus temperature dependency and change of crystals/oscillators in the system, several (safety) margins 113 for such frequency offsets/timing drifts of the low power clock have to be taken into account for worst case use-cases. This can be achieved by e.g. limiting the sleep period 111 during low power cycles by certain assumption of the temperature gradient in the device 110 and a corresponding timing driving of the low power clock due to its frequency versus temperature behavior. US 2016/0322978 A1 shows a radio device comprising two clock units one being used during an active phase and a low power clock used during a sleep phase. US 2016/0322978 A1 teaches calibrating the low power, low frequency clock using a reference oscillator when a measured temperature value differs from a previously measured temperature value by more than a threshold amount. US 2008/0222440 A1 also shows a radio device using a high frequency clock unit and a low frequency clock unit according to an active or a sleeping phase. A control circuit is active to determine when to recalibrate the low frequency clock dependent on an instantaneous temperature.

Such margins 113, in particular if not suitably designed, may result in a waste of power 114 reducing battery life time of the mobile device 110. Hence, there is a need for designing a mobile device in which the margin from sleeping phase to active phase is reduced in order to save power.

### SUMMARY

Various embodiments provide a radio device.

The radio device comprises: a first clock unit; a second clock unit configured to run at a lower clock rate than a clock rate of the first clock unit; and a processor configured to operate based on the first clock unit in an operation mode and based on the second clock unit in a sleeping mode, wherein the second clock unit is configured to determine at least one of a temperature deviation and a frequency deviation of the second clock unit and to indicate the at least one of a temperature deviation and frequency deviation to the processor, characterized in that the processor is configured to change from the sleeping mode to the operation mode in response to the indication of the at least one of a temperature deviation and frequency deviation. The radio device mentioned in this paragraph provides a first example.

The processor may be configured to indicate the sleeping mode to the second clock unit, and the second clock unit may be configured to indicate the at least one of a temperature deviation and frequency deviation depending on the indication of the sleeping mode. The features mentioned in this paragraph in combination with the first example provide a second example.

The second clock unit may be configured to determine the at least one of a temperature deviation and frequency deviation based on a gradient measurement of at least one of a temperature and frequency of the second clock unit. The features mentioned in this paragraph in combination with any one of the first example to the second example provide a third example.

The second clock unit may be configured to continuously report the at least one of a temperature deviation and frequency deviation to the processor. The features mentioned in this paragraph in combination with the third example provide a fourth example.

The second clock unit may be configured to determine the at least one of a temperature deviation and frequency deviation based on a threshold deviation. The features mentioned in this paragraph in combination with any one of the first example to the second example provide a fifth example.

The second clock unit may be configured to report the at least one of a temperature and frequency deviation when the at least one of the temperature deviation and frequency deviation exceeds the threshold deviation.
The features mentioned in this paragraph in combination with the fifth example provide a sixth example.

The second clock unit may comprise an input configured to receive the threshold deviation. The features mentioned in this paragraph in combination with any one of the fifth example to the sixth example provide a seventh example.

The threshold deviation may indicate at least one of a temperature deviation and frequency deviation level that is present when the processor enters the sleeping mode. The features mentioned in this paragraph in combination with any one of the fifth example to the seventh example provide an eighth example.

The threshold deviation may be predefined. The features mentioned in this paragraph in combination with any one of the fifth example to the seventh example provide a ninth example.

The second clock unit may comprise a temperature compensated MEMS oscillator. The features mentioned in this paragraph in combination with any one of the first example to the ninth example provide a tenth example.

The second clock unit may comprise: an oscillator comprising a temperature versus frequency characteristics; a Phase-Locked Loop, PLL, coupled with the oscillator; and a temperature control unit configured to provide a temperature control value to a control input of the PLL to compensate for frequency variation of the oscillator over temperature. The features mentioned in this paragraph in combination with any one of the first example to the tenth example provide an eleventh example.

Various embodiments provide a method for indicating at least one of a temperature deviation and frequency deviation.

The method comprises: operating a processor based on a first clock rate of a first clock unit in an operation mode and based on a second clock rate of a second clock unit in a sleeping mode, wherein the second clock rate is lower than the first clock rate; determining at least one of a temperature deviation and frequency deviation of the second clock unit; and indicating the at least one of a temperature deviation and frequency deviation to the processor, characterized in that the processor changes from the sleeping mode to the operation mode in response to the indication of the at least one of a temperature deviation and frequency deviation. The method mentioned in this paragraph provides a twelfth example.

The method may comprise: indicating, by the processor, the sleeping mode to the second clock unit, and indicating, by the second clock unit, the at least one of a temperature deviation and frequency deviation depending on the indication of the sleeping mode. The features mentioned in this paragraph in combination with the twelfth example provide a thirteenth example.

Various embodiments provide a computer readable non-transitory medium on which computer instructions are stored which when executed by a computer cause the computer to perform the method of any one of twelfth example to the thirteenth example.

### BRIEF DESCRIPTION OF THE DRAWINGS

The accompanying drawings are included to provide a further understanding of examples and are incorporated in and constitute a part of this specification. The drawings illustrate examples and together with the description serve to explain principles of examples. Other examples and many of the intended advantages of examples will be readily appreciated as they become better understood by reference to the following detailed description.
Fig. 1 is a schematic diagram illustrating a wireless communication system 100 with a mobile device 110 changing from a sleeping phase 111 to an active phase 112.
Fig. 2 is a block diagram of an exemplary hardware configuration 200 of a mobile device without temperature compensation.
Fig. 3 is a block diagram of an exemplary hardware configuration 300 of a mobile device with temperature measurement to allow compensation.
Fig. 4 is a block diagram of an exemplary hardware configuration 400 of a mobile device with temperature compensated kHz clock and frequency/temperature deviation indication based on continuous gradient observation.
Fig. 5 is a block diagram of an exemplary hardware configuration 500 of a mobile device with temperature compensated kHz clock and frequency/temperature deviation indication relative to a level determined by a sleep state signal.
Fig. 6 is a block diagram of an exemplary clock device 600 with integrated frequency/temperature deviation indication functionality.
Fig. 7 is a block diagram of an exemplary radio device with frequency/temperature deviation indication functionality.
Fig. 8 is a schematic diagram of a method 800 for indicating a temperature and/or frequency deviation.

### DETAILED DESCRIPTION

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the concept of the present disclosure. The following detailed description, therefore, is not to be taken in a limiting sense, and the concept of the present disclosure is defined by the appended claims.

The following terms, abbreviations and notations will be used herein:
- MEMS:: Microelectromechanical System
- TCMO:: Temperature compensated MEMS oscillator
- TCXO:: Temperature compensated crystal oscillator
- RF:: Radio frequency
- BB:: Baseband
- XO:: crystal oscillator
- TRX:: RF transmitter, RF processor
- DTX:: discontinuous transmission

The methods and devices described herein may be based on radio devices and clock devices. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 Hz to about 300 GHz. The frequency range may correspond to frequencies of alternating current electrical signals used to produce and detect radio waves.

The methods and devices described herein may be configured to transmit and/or receive millimeter wave (mmW) signals. Millimeter waves are radio waves in the electromagnetic spectrum from about 30 GHz to about 300 GHz. Radio frequencies in this band have wavelengths from about ten to about one millimeter, giving it the name millimeter band or millimeter wave.

In the following, examples are described with reference to the drawings, wherein like reference numerals are generally utilized to refer to like elements throughout. In the following description, for purposes of explanation, numerous specific details are set forth in order to provide a thorough understanding of one or more aspects of examples. However, it may be evident to a person skilled in the art that one or more aspects of the examples may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects are merely examples and that other aspects may be utilized and structural and functional modifications may be made without departing from the subject matter of appended claims.

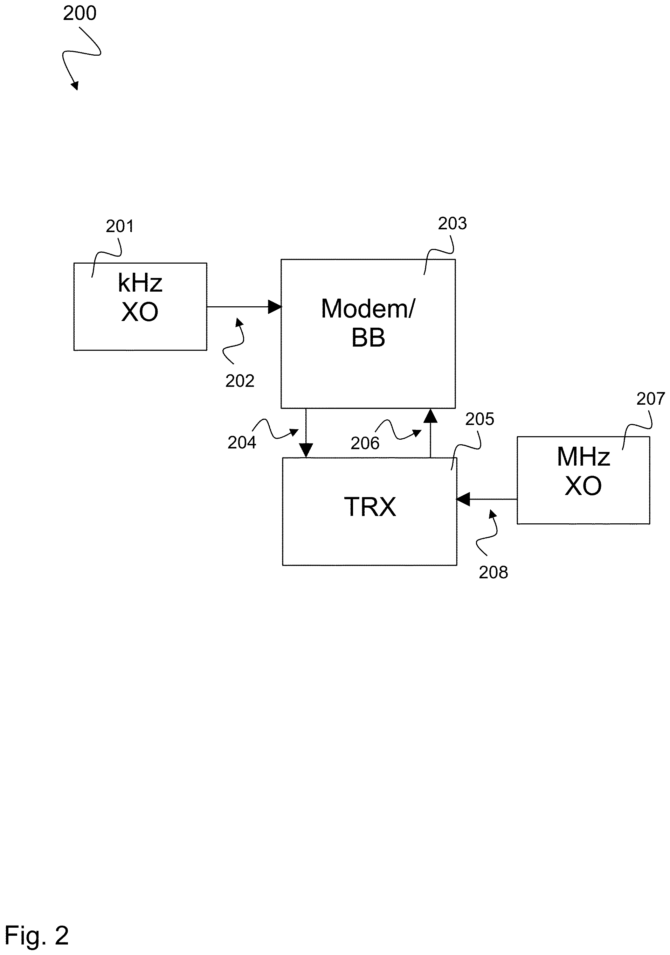

Fig. 2 is a block diagram of an exemplary hardware configuration 200 of a mobile device without temperature compensation. The mobile device can be a user equipment or a machine-type communication device, for example.

In the design 200 illustrated in Fig. 2, there are dedicated clock/frequency references in the system, for example a MHz oscillator 207 as frequency reference for the RF 205 and a kHz clock 201 for time keeping. Maximum power conservation can be achieved when the RF 205 is only immediately activated before the RF 205 activity on the radio link is expected, for example immediately before a paging burst. This requires a stable low power clock 201 whilst the modem/RF 203, 205 is inactive. Typically, the high accurate RF reference clock is used immediately before sleep phases to measure the low power kHz clock frequency offset, as the RF reference clock frequency deviation is known due to the fact that the device is synchronized to a Base-Station/eNodeB. This allows to compensate for any frequency offsets/timing drifts of the low power clock 201 and to extend the sleep phase as much as possible in order to save power.

Though the low power oscillator/crystal has a certain temperature versus frequency characteristics, temperature variation during the sleep phase of the modem/RF 203, 205 may occur without the knowledge of the modem 203 which is in sleep. This is taken into account in the system definition phase by certain margins in the wake/sleep window under the assumption of temperature characteristics of the low power oscillator/crystal 201 and assumed temperature gradients. Such margins result in worse power consumption of the whole system in "typical" cases in which no extreme gradients are present.

In some system implementations the low power oscillators 201 are delivered as self-contained temperature compensated MEMS oscillators (TCMO). By introducing such oscillators the sleep window can be extended compared to a non-compensated crystal/MEMS oscillator. However, even by using such oscillators in some implementations the sleep window may still be designed for the maximum frequency/clock offset/drift assuming a maximum temperature drift.

In the hardware configuration 200 of Fig. 2 a second clock unit 201 that is a low frequency clock unit (e.g. a kHz clock unit) provides a low frequency clock signal 202 (e.g. a kHz clock signal) to the modem and BB (baseband) part 203 of the mobile device. A first clock unit 207 that is a high frequency clock unit (e.g. a MHz clock unit) provides a high frequency clock signal 208 (e.g. a MHz clock signal) to the transmitter 205 of the mobile device. The modem and BB part 203 is coupled with the transmitter 205 by a transmit/receive interface 204, 206. The modem/BB part 203 may be implemented by a processor, for example a low voltage processor or processor system. The transmitter 205 may be implemented by a processor, for example a high voltage processor or processor system. In an operation mode of the mobile device the modem/BB part 203 and the transmitter 205 may be clocked by the high frequency clock signal 208 of the high frequency clock unit 207. In a sleeping mode of the mobile device the modem/BB part 203 may be clocked by the low frequency clock signal 202 of the low frequency clock unit 201 while the transmitter TRX 205 may be turned off.

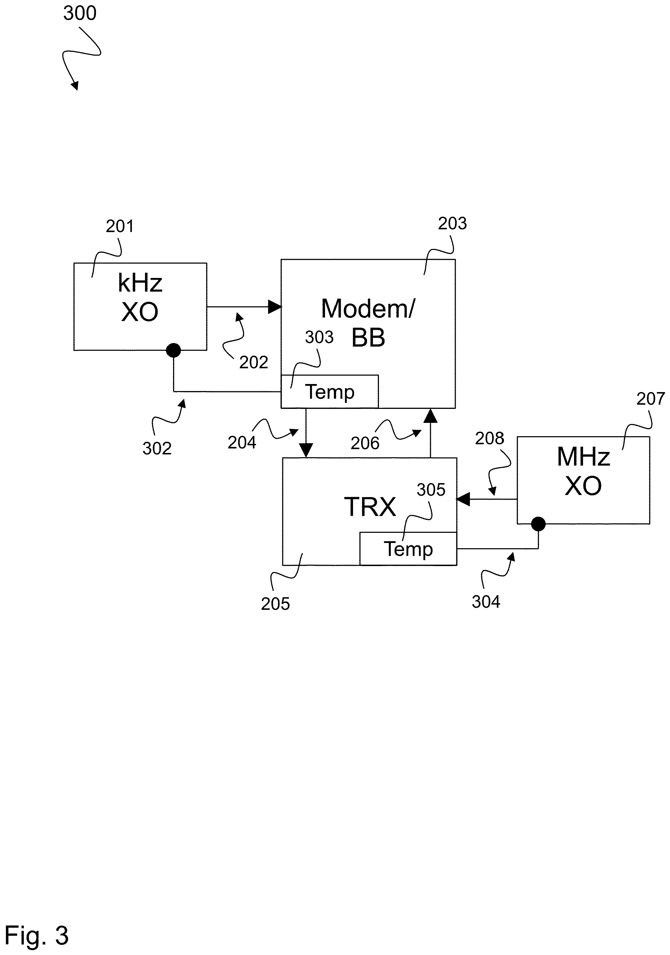

Fig. 3 is a block diagram of an exemplary hardware configuration 300 of a mobile device with temperature measurement to allow compensation.

The hardware configuration 300 corresponds to the hardware configuration 200 described above. However, an additional temperature measurement to allow temperature/frequency compensation is added. A first temperature measurement module 303 is implemented at the modem/BB part 203 for measuring a temperature 302 at the low frequency clock unit 201. A second temperature measurement module 305 is implemented at the transmitter 205 for measuring a temperature 304 at the high frequency clock unit 207. The modem/BB processor 203 can perform temperature/frequency compensation of the low frequency clock signal 202 based on the measured temperature 302 at the second clock unit 201. The transmit processor 205 can perform temperature/frequency compensation of the high frequency clock signal 208 based on the measured temperature 304 at the second clock unit 207.

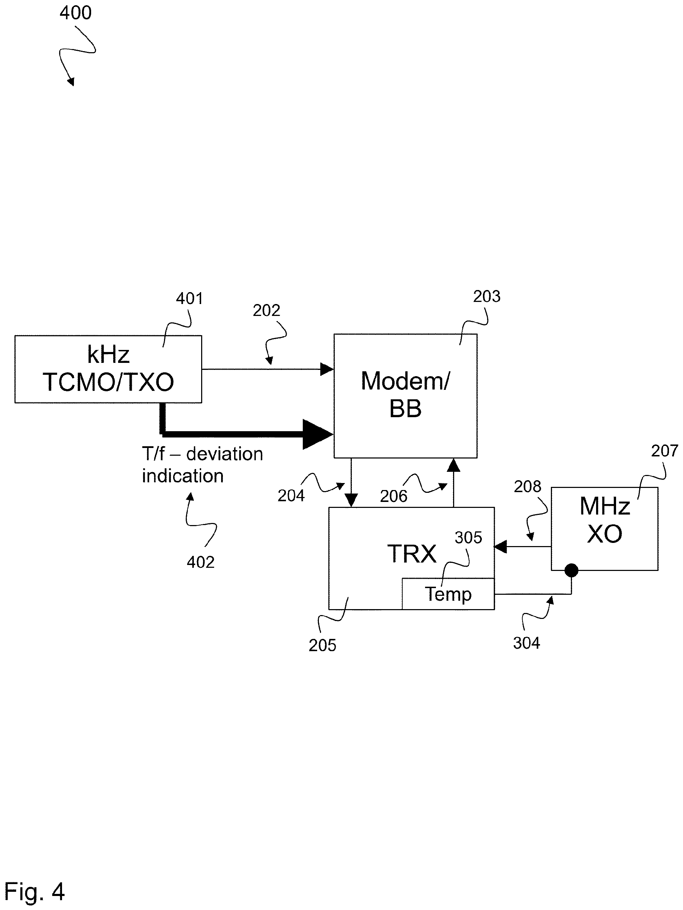

Fig. 4 is a block diagram of an exemplary hardware configuration 400 of a mobile device with temperature compensated kHz clock and frequency/temperature deviation indication based on continuous gradient observation.

The hardware configuration 400 corresponds to the hardware configuration 300 described above. However, the low frequency clock unit 201 is replaced by a TCMO/TCXO clock unit 401 and the first temperature measurement module 303 at the modem/BB part 203 is replaced by a temperature and/or frequency deviation indication. A frequency deviation may depend on a temperature deviation and vice versa. So the clock unit 401 may indicate only frequency deviation or only temperature deviation, or both. The TCMO/TCXO clock unit 401 is a clock unit based on a temperature compensated MEMS (microelectromechanical system) oscillator in one implementation or based on a temperature compensated crystal oscillator in another implementation. A temperature(T)/frequency(f) deviation indication may be transmitted from the TCMO/TCXO clock unit 401 to the modem/BB processor 203. The modem/BB processor 203 can perform temperature/frequency compensation of the low frequency clock signal 202 based on the temperature/frequency deviation indication 402 received from the TCMO/TCXO clock unit 401.

The frequency/temperature deviation indication can be based on a continuous gradient observation. That is, a continuous monitoring of the temperature and/or frequency gradient with respect to time is implemented at the TCMO/TCXO clock unit 401 and the gradient is indicated, i.e. transmitted to the modem/BB processor 203.

The hardware design 400 of Fig. 4 is a further improvement compared to the hardware designs 200, 300 described above with respect to Figs. 2 and 3.

The TCMO 401 can give an indication to the modem 203 if it exceeds a certain temperature/frequency deviation and wake-up the modem 203 to interact accordingly. So even with tighter (i.e. shorter) sleep windows, the system can wake up early enough to avoid an omission of, e.g., monitoring the paging channel. Since an omission of monitoring the paging channel would result in a high current consumption due to the need of repetitive searching for the missing burst. The TCMO 401 has all the needed information of temperature/frequency deviation inherently in its system, and it has a good coupling of the temperature sensor to the resonator/oscillator. It is thus outperforming any external temperature measurement unit which would need additional current and area.

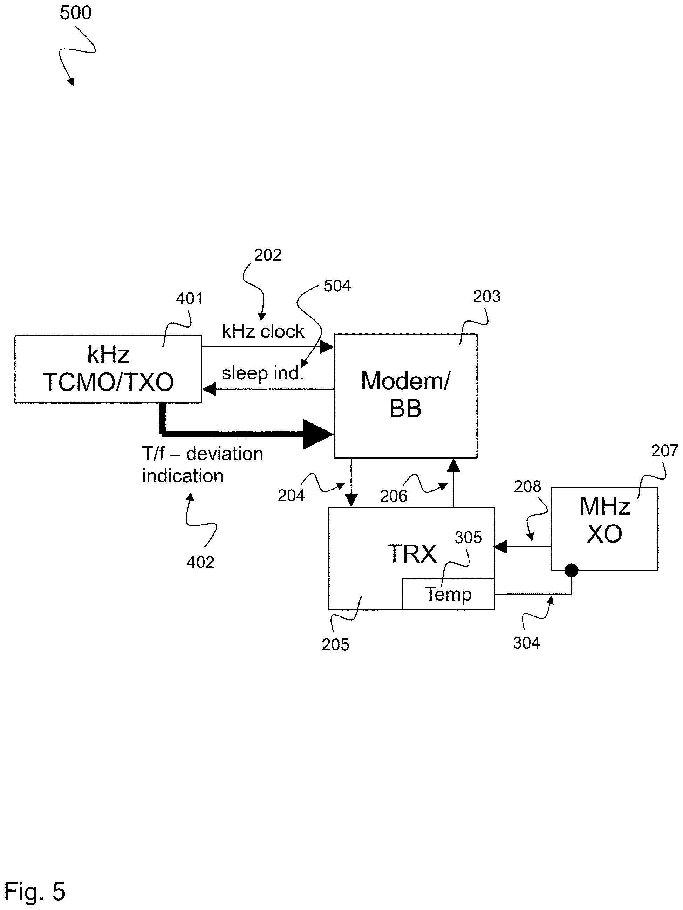

The frequency/temperature deviation 402 can be constantly reported by measuring the gradient as shown in Fig. 4. An enhanced arrangement may report the deviation of frequency/temperature 402 of the kHz signal 202 relative to a "level" which is present if the modem 203 enters the sleep state, for example as described in connection with Fig. 5 below. This may be indicated by an according signal 504 routed to the kHz TCMO/TCXO 401. This can be extended not only to the modem 203, but any other device in the system which can make use of such a frequency/temperature deviation 402 of the kHz low-power signal 202.

Fig. 5 is a block diagram of an exemplary hardware configuration 500 of a mobile device with temperature compensated kHz clock and frequency/temperature deviation indication relative to a level determined by a sleep state signal.

The hardware configuration 500 corresponds to the hardware configuration 400 described above with respect to Fig. 4. However, instead of the temperature/frequency gradient, the deviation of temperature and/or frequency of the TCMO/TCXO clock unit 401 relative to a level determined by a sleep state signal 504 are indicated by the T/f deviation indication 402. The sleep state signal 504 is provided by the modem/BB processor 203 to the TCMO/TCXO clock unit 401.

With the hardware configurations 400 and 500, the operation time of a battery powered mobile device may be extended by giving a frequency/clock deviation indication 402 to the modem 203 while the modem 203 is in sleep.

The mobile device is equipped with a low-frequency/low-power clock 401 (typically kHz and uA current) used during sleep times for time keeping purpose and a high-frequency/full-power clock 207 (typically MHz and mA current) during operation, for example while RF is active. This indication 402 may come from the low-power clock unit 401 which may be a TCMO or TCXO in case of a crystal. This is exceeding any leverage of a potential of an overall central temperature control indication unit in the system to observe temperature behavior while the wireless device (modem 203) is only running from its low power reference.

In an alternative implementation (not illustrated), the frequency/temperature deviation indication according to Fig. 4 or Fig. 5 can also be implemented for the second clock unit 207.

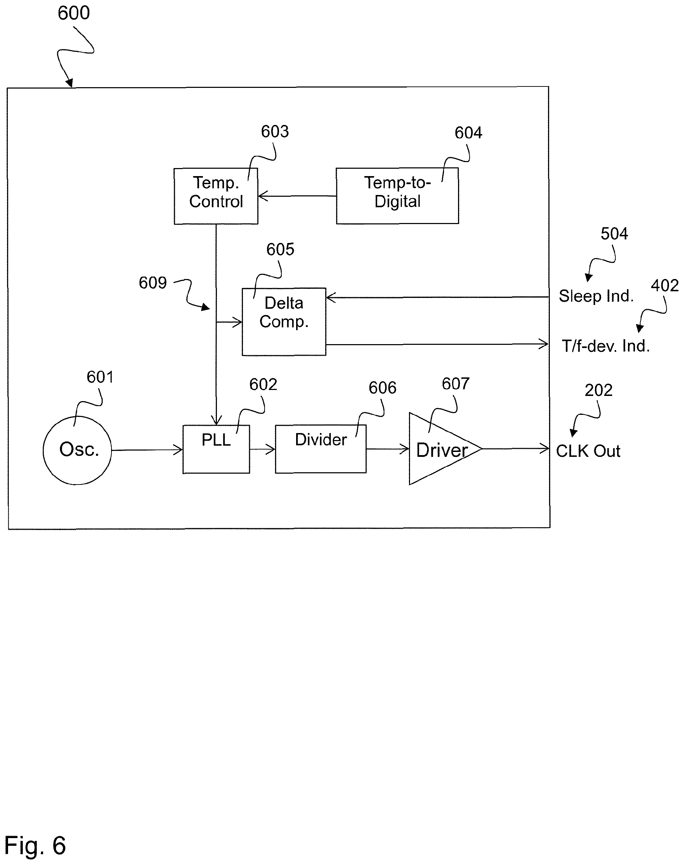

Fig. 6 is a block diagram of an exemplary clock device 600 with integrated frequency/temperature deviation indication functionality.

The clock device 600 is an exemplary implementation of the second clock unit 201, i.e. the low power clock unit as described above with respect to Figs. 2 and 3 or of the TCMO or TCXO 401 as described above with respect to Fig. 4 and 5.

The clock device 600 includes an oscillator 601, for example a TCMO or a TCXO providing an oscillator signal to a phase-locked loop (PLL) 602. An output of the PLL is optionally passed through a divider 606 and optionally passed through a driver 607 to provide a clock signal 202 at a clock output of the clock device 600. The clock signal 292 may correspond to the low power clock signal 202 described above with respect to Figs. 2 to 5. The PLL 602 is temperature controlled by a temperature control signal 609 which is provided by a temperature control module 603 configured to control the PLL based on a temperature measurement. A temperature-to-digital (TDC) module 604 provides the temperature measured at the clock unit 600 in digital form to the temperature control module 603. The temperature control module 603 is configured to provide the temperature control signal 609 based on the digital temperature value received from the TDC module 604 by applying some temperature control logic.

Hence, the temperature control signal 609 depends on the temperature of the clock unit 600. The clock unit 600 further includes a comparator 605, in particular a delta comparator, which is configured to determine a deviation of the temperature control signal 609, either by determining a continuous gradient observation of the temperature control signal 609 as described above with respect to Fig. 4 or by determining a level with respect to a sleep indication signal 504 as described above with respect to Fig. 5. At an output of the comparator the temperature/frequency deviation 402 is indicated.

Such clock unit 600 may drastically extend low power phase durations by giving an indication 402 from the low-power kHz TCMO 600 to the Modem/RF 203, 205 in case that the kHz frequency exceeds a certain limit.

Some kHz TCMO implementations have temperature measurement unit 604 integrated which is the input to control unit 603 for PLL 602, e.g. a fractional-PLL, to compensate for frequency variation of the oscillator 601, e.g. the MEMS oscillator over temperature.

Sleep period duration can be extended by the following extension of those TCMO modules: Before modem 203 goes to sleep (indicated by a signal 504 from modem 203 to TCMO 600), the current PLL counter value will be captured and this value is continuously compared to a prescribed delta value. If during the sleep phase the PLL counter exceeds the delta value (which corresponds to a certain frequency accuracy range of the low-power clock), it will wake up the modem/BB 203. If the temperature is stable, there is no such wake-up trigger and the sleep time of the modem/BB 203 may be very long. This may result in power savings which may be important for wearables and IoT devices, specifically where much longer DRX (discontinuous reception) phases are targeted compared to phone applications. The additional compare unit 605 only results in a minimum current overhead, which is very important as the typical current consumption of such TCMO is in a ∼4uA range.

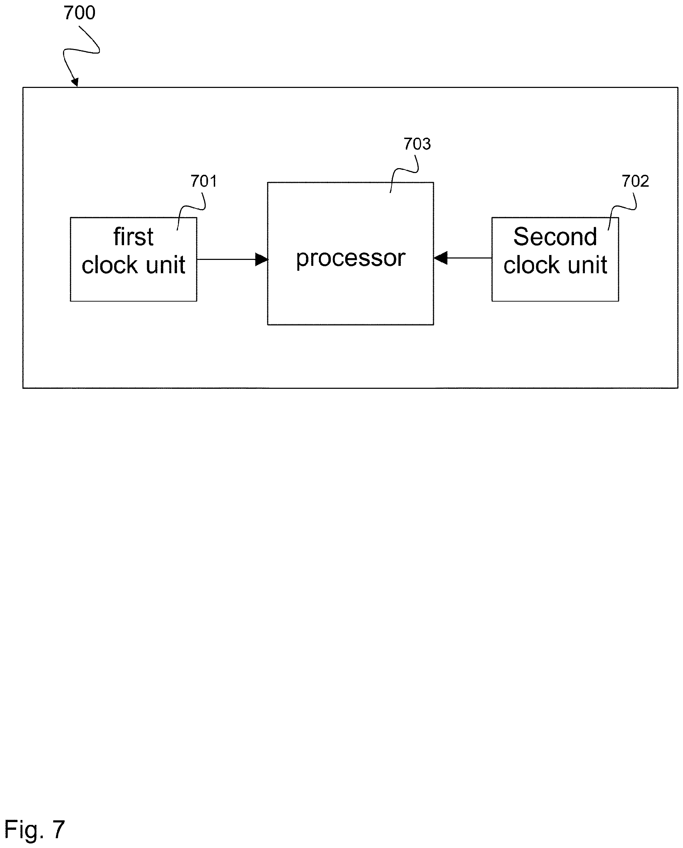

Fig. 7 is a block diagram of an exemplary radio device 700 with frequency/temperature deviation indication functionality. The radio device 700 may be seen as a generalization of the devices described above with respect to Figs. 2 to 6. The radio device 700 includes a first clock unit 701, a second clock unit 702 and a processor 703. The second clock unit 702 may correspond to the low frequency clock unit 201 described above with respect to Figs. 2 and 3, the TCMO/TCXO clock unit 401 described above with respect to Figs. 4 and 5 or to the clock unit 600 described above with respect to Fig. 6.

The first clock unit 701 may correspond to the high frequency clock unit 207 described above with respect to Figs. 2 to 5. The processor 703 may correspond to the modem/BB processor 203 described above with respect to Figs. 2 to 5. The first clock unit 701 may be coupled with the processor 703 by a RF transmitter, for example a TRX device 205 as described above with respect to Figs. 2 to 5.

The second clock unit 702 is configured to run at a lower clock rate than the first clock unit 701. The second clock unit 702 may be a kHz clock unit while the first clock unit 701 may be a MHz clock unit, for example as shown above with respect to Figs. 2 to 5.

The processor 703 is configured to operate based on the first clock unit 701 in an operation mode and based on the second clock unit 702 in a sleeping mode, for example as described above with respect to Figs. 2 to 6. The second clock unit 702 is configured to determine at least one of a temperature and frequency deviation of the second clock unit 702 and to indicate the at least one of a temperature and frequency deviation to the processor 703, for example as described above with respect to Figs. 2 to 6.

The processor 703 may be configured to indicate the sleeping mode to the second clock unit 702. The second clock unit may be configured to indicate the at least one of a temperature and frequency deviation depending on the indication of the sleeping mode, for example as described above with respect to Figs. 2 to 6.

The processor 703 may be configured to change from the sleeping mode to the operation mode based on the indication of the at least one of a temperature and frequency deviation.

The second clock unit 702 may be configured to determine the at least one of a temperature and frequency deviation based on a gradient measurement of at least one of a temperature and frequency of the second clock unit, for example as described above with respect to Figs. 4 and 6. The second clock unit 702 may be configured to continuously report the at least one of a temperature and frequency deviation to the processor 703.

The second clock unit 702 may be configured to determine the at least one of a temperature and frequency deviation based on a threshold deviation, for example as described above with respect to Figs. 5 and 6. The second clock unit 702 may be configured to report the at least one of a temperature and frequency deviation when the at least one of a temperature and frequency deviation exceeds the threshold deviation. The second clock unit 702 may include an input configured to receive the threshold deviation, for example as described above with respect to Figs. 5 and 6. The threshold deviation may indicate at least one of a temperature and frequency deviation level that is present when the processor enters the sleeping mode, for example as described above with respect to Figs. 5 and 6. The threshold deviation may be predefined.

The second clock unit 702 may include a temperature compensated MEMS oscillator, for example as described above with respect to Figs. 4 and 5.

The second clock unit 702 may include: an oscillator 601 including a temperature versus frequency characteristics, a PLL 602 coupled with the oscillator 601, and a temperature control unit 603 configured to provide a temperature control value 609 to a control input of the PLL 602 to compensate for frequency variation of the oscillator 601 over temperature, for example as described above with respect to Fig. 6.

The second clock unit 702 may be configured to determine the at least one of a temperature and frequency deviation based on the temperature control value 609, for example as described above with respect to Fig. 6. The second clock unit 702 may include a comparator 605 configured to determine the at least one of a temperature and frequency deviation, for example as described above with respect to Fig. 6. The comparator 605 may be configured to determine the at least one of a temperature and frequency deviation based on at least one of a temperature and frequency of the second clock unit 702 and at least one of a temperature and frequency of the second clock unit 702 previously determined, for example as described above with respect to Figs. 4 and 6.

The comparator 605 may be configured to determine the at least one of a temperature and frequency deviation based on at least one of a temperature and frequency of the second clock unit 702 and a threshold, for example as described above with respect to Figs. 5 and 6.

The second clock unit 702 may be configured to run at a kHz clock rate. The first clock unit 701 may be configured to run at a MHz clock rate, for example as described above with respect to Figs. 2 to 6.

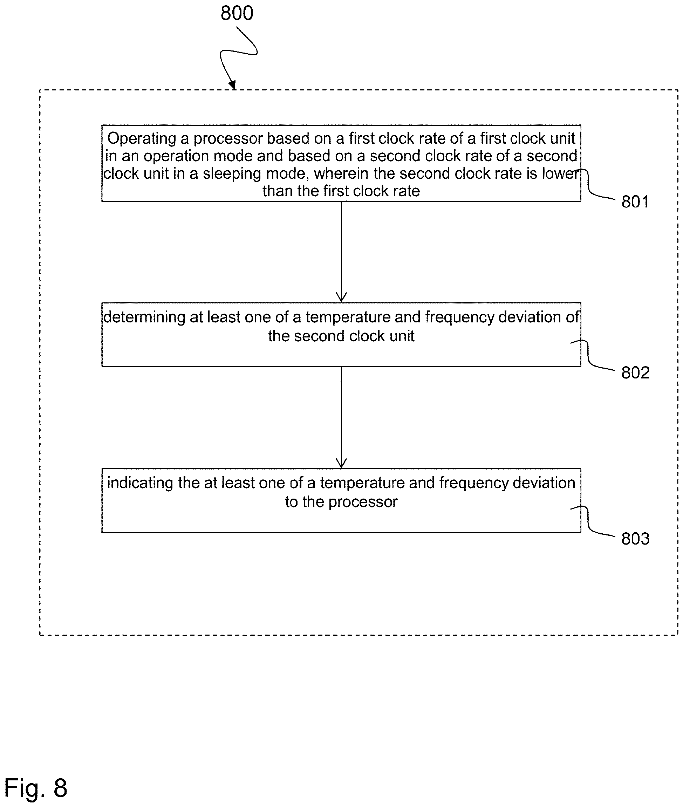

Fig. 8 is a schematic diagram of a method 800 for indicating a temperature and/or frequency deviation.

The method 800 includes operating 801 a processor based on a first clock rate of a first clock unit in an operation mode and based on a second clock rate of a second clock unit in a sleeping mode, wherein the second clock rate is lower than the first clock rate. The method 800 further includes determining 802 at least one of a temperature and frequency deviation of the second clock unit. The method 800 further includes indicating 803 the at least one of a temperature and frequency deviation to the processor.

The method 800 may further include the functionality of the devices described above with respect to Figs. 2 to 7. The method 800 may be implemented with a mobile device, in particular a battery-driven device as described above.

The methods, systems and devices described herein may be implemented as software in a Digital Signal Processor (DSP), in a micro-controller or in any other side-processor or as hardware circuit on a chip or within an application specific integrated circuit (ASIC).

Examples described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 800 or the techniques described above with respect to Figs. 2 to 7. Such a computer program product may include a computer-readable non-transitory storage medium storing program code thereon for use by a processor, the program code including instructions for performing any of the method 800 or the techniques as described above.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with" or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the subject matter of appended claims. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A radio device, comprising:
a first clock unit (207);
a second clock unit (201, 401) configured to run at a lower clock rate than a clock rate of the first clock unit; and
a processor (203) configured to operate based on the first clock unit (207) in an operation mode and based on the second clock unit (201, 401) in a sleeping mode,
wherein the second clock unit (201, 401) is configured to determine at least one of a temperature deviation and a frequency deviation of the second clock unit (201, 401) and to indicate the at least one of a temperature deviation and frequency deviation to the processor, **characterized in that** the processor is configured to change from the sleeping mode to the operation mode in response to the indication of the at least one of a temperature deviation and frequency deviation.

2. The radio device of claim 1,
wherein the processor is configured to indicate the sleeping mode to the second clock unit (201, 401), and
wherein the second clock unit (201, 401) is configured to indicate the at least one of a temperature deviation and frequency deviation depending on the indication of the sleeping mode.

3. The radio device of one of the preceding claims,
wherein the second clock unit (201, 401) is configured to determine the at least one of a temperature deviation and frequency deviation based on a gradient measurement of at least one of a temperature and frequency of the second clock unit.

4. The radio device of claim 3,
wherein the second clock unit (201, 401) is configured to continuously report the at least one of a temperature deviation and frequency deviation to the processor (203).

5. The radio device of one of claims 1 to 2,
wherein the second clock unit (201, 401) is configured to determine the at least one of a temperature deviation and frequency deviation based on a threshold deviation.

6. The radio device of claim 5,
wherein the second clock unit (201, 401) is configured to report the at least one of a temperature and frequency deviation when the at least one of the temperature deviation and frequency deviation exceeds the threshold deviation.

7. The radio device of claim 5 or 6,
wherein the second clock unit (201, 401) comprises an input configured to receive the threshold deviation.

8. The radio device of one of claims 5 to 7,
wherein the threshold deviation indicates at least one of a temperature deviation and frequency deviation level that is present when the processor (203) enters the sleeping mode.

9. The radio device of one of claims 5 to 7,
wherein the threshold deviation is predefined.

10. The radio device of one of the preceding claims,
wherein the second clock unit (201, 401) comprises a temperature compensated MEMS oscillator.

11. The radio device of one of the preceding claims, wherein the second clock unit (201, 401) comprises:
an oscillator comprising a temperature versus frequency characteristics;
a Phase-Locked Loop, PLL, coupled with the oscillator; and
a temperature control unit configured to provide a temperature control value to a control input of the PLL to compensate for frequency variation of the oscillator over temperature.

12. A method for indicating at least one of a temperature deviation and frequency deviation, the method comprising:
operating a processor (203) based on a first clock rate of a first clock unit (207) in an operation mode and based on a second clock rate of a second clock unit (201, 401) in a sleeping mode, wherein the second clock rate is lower than the first clock rate;
determining at least one of a temperature deviation and frequency deviation of the second clock unit (201, 401); and
indicating the at least one of a temperature deviation and frequency deviation to the processor (203), **characterized in that** the processor (203) changes from the sleeping mode to the operation mode in response to the indication of the at least one of a temperature deviation and frequency deviation.

13. The method of claim 12, comprising:
indicating, by the processor (203), the sleeping mode to the second clock unit (201, 401), and
indicating, by the second clock unit (201, 401), the at least one of a temperature deviation and frequency deviation depending on the indication of the sleeping mode.

14. A computer readable non-transitory medium on which computer instructions are stored which when executed by a computer cause the computer to perform the method of claim 12 or 13.

## Patentansprüche

1. Funkvorrichtung, umfassend:
eine erste Takteinheit (207);
eine zweite Takteinheit (201, 401), die konfiguriert ist, um mit einer niedrigeren Taktrate als eine Taktrate der ersten Takteinheit zu laufen; und
einen Prozessor (203), der konfiguriert ist, um auf der Grundlage der ersten Takteinheit (207) in einem Betriebsmodus und auf der Grundlage der zweiten Takteinheit (201, 401) in einem Schlafmodus betrieben zu werden,
wobei die zweite Takteinheit (201, 401) konfiguriert ist, um mindestens eine von einer Temperaturabweichung und einer Frequenzabweichung der zweiten Takteinheit (201, 401) zu bestimmen und um mindestens eine Temperaturabweichung und Frequenzabweichung dem Prozessor anzuzeigen, **dadurch gekennzeichnet, dass**
der Prozessor konfiguriert ist, um von dem Schlafmodus in den Betriebsmodus zu wechseln, als Reaktion auf die Anzeige der mindestens einen von einer Temperaturabweichung oder Frequenzabweichung.

2. Funkvorrichtung nach Anspruch 1, wobei der Prozessor konfiguriert ist, um den Schlafmodus der zweiten Takteinheit (201, 401) anzuzeigen, und
wobei die zweite Takteinheit (201, 401) konfiguriert ist, um die mindestens eine von einer Temperaturabweichung und Frequenzabweichung in Abhängigkeit von der Anzeige des Schlafmodus anzuzeigen.

3. Funkvorrichtung nach einem der vorhergehenden Ansprüche, wobei die zweite Takteinheit (201, 401) konfiguriert ist, um die mindestens eine von einer Temperaturabweichung und Frequenzabweichung, auf der Grundlage einer Gradienten-Messung von mindestens einer von einer Temperatur und Frequenz der zweiten Takteinheit, zu bestimmen.

4. Funkvorrichtung nach Anspruch 3, wobei die zweite Takteinheit (201, 401) konfiguriert ist, um kontinuierlich die mindestens eine von einer Temperaturabweichung und Frequenzabweichung dem Prozessor (203) zu berichten.

5. Funkvorrichtung nach einem der Ansprüche 1 bis 2,
wobei die zweite Takteinheit (201, 401) konfiguriert ist, um die mindestens eine von einer Temperaturabweichung und Frequenzabweichung, auf der Grundlage einer Schwellenwertabweichung, zu bestimmen.

6. Funkvorrichtung nach Anspruch 5,
wobei die zweite Takteinheit (201, 401) konfiguriert ist, um die mindestens eine von einer Temperaturabweichung und Frequenzabweichung zu berichten, wenn die mindestens eine von der Temperaturabweichung und Frequenzabweichung die Schwellenwertabweichung überschreitet.

7. Funkvorrichtung nach Anspruch 5 oder 6,
wobei die zweite Takteinheit (201, 401) eine Eingabe umfasst, der konfiguriert ist, um die Schwellenwertabweichung zu empfangen.

8. Funkvorrichtung nach einem der Ansprüche 5 bis 7,
wobei die Schwellenwertabweichung mindestens eines von einem Temperaturabweichungs- und Frequenzabweichungsniveaus anzeigt, das vorhanden ist, wenn der Prozessor (203) in den Schlafmodus eintritt.

9. Funkvorrichtung nach einem der Ansprüche 5 bis 7, wobei die Schwellenwertabweichung vordefiniert ist.

10. Funkvorrichtung nach einem der vorhergehenden Ansprüche, wobei die zweite Takteinheit (201, 401) einen temperaturkompensierten MEMS-Oszillator umfasst.

11. Funkvorrichtung nach einem der vorhergehenden Ansprüche, wobei die zweite Takteinheit (201, 401) umfasst:
einen Oszillator, der eine Temperatur-gegen-Frequenz-Charakteristik umfasst;
ein Phase-Locked Loop, PLL, der mit dem Oszillator gekoppelt ist; und
eine Temperatursteuereinheit, die konfiguriert ist, um einen Temperatursteuerwert an eine Steuereingabe des PLL bereitzustellen, um Frequenzvariation des Oszillators über eine Temperatur zu kompensieren.

12. Verfahren zum Anzeigen mindestens einer von einer Temperaturabweichung und Frequenzabweichung, wobei das Verfahren umfasst:
Betreiben eines Prozessors (203) auf der Grundlage einer ersten Taktrate einer ersten Takteinheit (207) in einem Betriebsmodus und auf der Grundlage einer zweiten Taktrate einer zweiten Takteinheit (201, 401) in einem Schlafmodus, wobei die zweite Taktrate niedriger ist als die erste Taktrate;
Bestimmen mindestens einer von einer Temperaturabweichung und Frequenzabweichung der zweiten Takteinheit (201, 401); und
Anzeigen der mindestens einen von einer Temperaturabweichung und Frequenzabweichung an den Prozessor (203), **dadurch gekennzeichnet, dass** der Prozessor (203) von dem Schlafmodus in den Betriebsmodus wechselt als Reaktion auf die Anzeige der mindestens einen von einer Temperaturabweichung und Frequenzabweichung.

13. Verfahren nach Anspruch 12, umfassend:
Anzeigen, durch den Prozessor (203), des Schlafmodus an die zweite Takteinheit (201, 401), und
Anzeigen, durch die zweite Takteinheit (201, 401), der mindestens einen von einer Temperaturabweichung und Frequenzabweichung in Abhängigkeit von der Anzeige des Schlafmodus.

14. Computerlesbares nichtflüchtiges Medium, auf welchem Computeranweisungen gespeichert sind, die, wenn sie durch einen Computer ausgeführt werden, den Computer dazu veranlassen, das Verfahren nach Anspruch 12 oder 13 durchzuführen.

## Revendications

1. Un dispositif radio, comprenant :
une première unité d'horloge (207) ;
une seconde unité d'horloge (201, 401) configurée pour s'exécuter à une vitesse d'horloge inférieure à une vitesse d'horloge de la première unité d'horloge ; et
un processeur (203) configuré pour fonctionner sur la base de la première unité d'horloge (207) dans un mode de fonctionnement et sur la base de la seconde unité d'horloge (201, 401) dans un mode de veille,
dans lequel la seconde unité d'horloge (201, 401) est configurée pour déterminer au moins l'un d'un écart de température et d'un écart de fréquence de la seconde unité d'horloge (201, 401) et pour indiquer au processeur l'au moins un d'un écart de température et d'un écart de fréquence, **caractérisé en ce que** le processeur est configuré pour passer du mode de veille au mode de fonctionnement en réponse à l'indication de l'au moins un d'un écart de température et d'un écart de fréquence.

2. Le dispositif radio selon la revendication 1,
dans lequel le processeur est configuré pour indiquer le mode de veille à la seconde unité d'horloge (201, 401), et
dans lequel la seconde unité d'horloge (201, 401) est configurée pour indiquer l'au moins un d'un écart de température et d'un écart de fréquence en fonction de l'indication du mode de veille.

3. Le dispositif radio selon l'une des revendications précédentes,
dans lequel la seconde unité d'horloge (201, 401) est configurée pour déterminer l'au moins un d'un écart de température et d'un écart de fréquence sur la base d'une mesure de gradient d'au moins l'une d'une température et d'une fréquence de la seconde unité d'horloge.

4. Le dispositif radio selon la revendication 3,
dans lequel la seconde unité d'horloge (201, 401) est configurée pour rendre compte en continu de l'au moins un d'un écart de température et d'un écart de fréquence au processeur (203).

5. Le dispositif radio selon l'une des revendications 1 et 2,
dans lequel la seconde unité d'horloge (201, 401) est configurée pour déterminer l'au moins un d'un écart de température et d'un écart de fréquence sur la base d'un écart seuil.

6. Le dispositif radio selon la revendication 5,
dans lequel la seconde unité d'horloge (201, 401) est configurée pour rendre compte de l'au moins un d'un écart de température et de fréquence lorsque l'au moins un de l'écart de température et de l'écart de fréquence dépasse l'écart seuil.

7. Le dispositif radio selon la revendication 5 ou 6,
dans lequel la seconde unité d'horloge (201, 401) comprend une entrée configurée pour recevoir l'écart seuil.

8. Le dispositif radio selon l'une des revendications 5 à 7,
dans lequel l'écart seuil indique au moins l'un d'un niveau d'écart de température et d'écart de fréquence qui est présent lorsque le processeur (203) entre dans le mode de veille.

9. Le dispositif radio selon l'une des revendications 5 à 7,
dans lequel l'écart seuil est prédéfini.

10. Le dispositif radio selon l'une des revendications précédentes,
dans lequel la seconde unité d'horloge (201, 401) comprend un oscillateur à MEMS compensé en température.

11. Le dispositif radio selon l'une des revendications précédentes, dans lequel la seconde unité d'horloge (201, 401) comprend :
un oscillateur comprenant des caractéristiques de température en fonction de la fréquence ;
une boucle à verrouillage de phase, PLL, couplée à l'oscillateur ; et
une unité de contrôle de température configurée pour fournir une valeur de contrôle de température à une entrée de contrôle de la PLL pour compenser la variation de fréquence de l'oscillateur sur la température.

12. Un procédé pour indiquer au moins l'un d'un écart de température et d'un écart de fréquence, le procédé comprenant :
le fonctionnement d'un processeur (203) sur la base d'une première vitesse d'horloge d'une première unité d'horloge (207) dans un mode de fonctionnement et sur la base d'une seconde vitesse d'horloge d'une seconde unité d'horloge (201, 401) dans un mode de veille, dans lequel la seconde vitesse d'horloge est inférieure à la première vitesse d'horloge ;
la détermination d'au moins l'un d'un écart de température et d'un écart de fréquence de la seconde unité d'horloge (201, 401) ; et
l'indication au processeur (203) de l'au moins un d'un écart de température et d'un écart de fréquence, **caractérisé en ce que** le processeur (203) passe du mode de veille au mode de fonctionnement en réponse à l'indication de l'au moins un d'un écart de température et d'un écart de fréquence.

13. Le procédé selon la revendication 12, comprenant :
l'indication, par le processeur (203), du mode de veille à la seconde unité d'horloge (201, 401), et
l'indication, par la seconde unité d'horloge (201, 401), de l'au moins un d'un écart de température et d'un écart de fréquence en fonction de l'indication du mode de veille.

14. Un support non transitoire lisible par ordinateur sur lequel sont stockées des instructions informatiques qui, lorsqu'elles sont exécutées par un ordinateur, amènent l'ordinateur à mettre en œuvre le procédé selon la revendication 12 ou 13.
